# EUROPÄISCHE PATENTANMELDUNG

(11) **EP 0 736 359 A1**
(43) Veröffentlichungstag der Anmeldung: **09.10.1996**
(21) Anmeldenummer: 96105391.5
(22) Anmeldetag: 04.04.1996
(51) Int. Cl.: B23Q 7/02, B23Q 39/04

(54) **Schalttrommelautomat**

(30) Priorität: 06.04.1995 DE 19512552
(71) Anmelder: Sonotronic Nagel GmbH, 76307 Karlsbad (DE)
(72) Erfinder: Wolf, Jürgen, 76307 Karlsbad (DE); Stierle, Siegfried, 75438 Knittlingen (DE)
(74) Vertreter: Twelmeier, Ulrich, Dipl. Phys.

(57) **Zusammenfassung**

Beschrieben wird eine Bearbeitungsmaschine, insbesondere Schweißmaschine, die mindestens eine Beladestation (22), mindestens eine Bearbeitungsstation (23-25) und mindestens eine Entladestation (26) für von der Bearbeitungsmaschine (1) zu bearbeitende Werkstücke besitzt, wobei die Werkstücke von der mindestens einen Beladestation (22) über die mindestens eine Bearbeitungsstation (23-25) zu der mindestens einen Entladestation (26) von einer Werkstück-Transporteinrichtung transportierbar sind.

Erfindungsgemäß ist vorgesehen, daß die die Werkstücke zwischen den Stationen (22-26) der Bearbeitungsmaschine (1) transportierende Werkstück-Transportiereinrichtung als eine um die Drehachse (A) drehbare Walze (10) ausgebildet ist, daß mindestens eine der Mantelflächen (10a-10e) der Walze (10) als eine Befestigungsfläche für eine Werkstückaufnahme (15a-15e) ausgebildet ist, und daß die mindestens eine Beladestation (22), die mindestens eine Bearbeitungsstation (23-25) und die mindestens eine Entladestation (26) im wesentlichen entlang des Umfangs der Walze (10) mit polygonalem Querschnitt angeordnet sind.

## Beschreibung

Die Erfindung betrifft eine Bearbeitungsmaschine, insbesondere eine Schweißmaschine, die mindestens eine Beladestation, mindestens eine Bearbeitungsstation und mindestens eine Entladestation für die von der Bearbeitungsmaschine zu bearbeitenden Werkstück aufweist, wobei die Werkstücke von der mindestens einen Beladestation über die mindestens eine Bearbeitungsstation zu der mindestens einen Entladestation von einer Werkstück-Transporteinheit transportierbar sind.

Derartige Bearbeitungsmaschinen sind bekannt und sind entweder als Durchlaufanlagen oder als Rundschalttischanlagen ausgebildet. Bei den Durchlaufanlagen werden die von der Bearbeitungsmaschine zu bearbeitenden Werkstücke aus einer Werkstückaufnahme einer Beladestation entnommen und über ein Fördersystem in die Werkstückaufnahme der der Beladestation folgenden Bearbeitungsstation eingelegt. Nachdem der von der ersten der meistens in Linie angeordneten Bearbeitungsstationen auszuführende Bearbeitungsvorgang durchgeführt wurde, wird das Werkstück von der Werkstückaufnahme der ersten Bearbeitung in die Werkstückaufnahme der darauffolgenden Bearbeitungsstation, etc. transportiert und schließlich in der die letzte Station der Durchlaufanlage ausbildenden Entladestation abgelegt.

Eine derartige Anordnung besitzt den Nachteil, daß die zu bearbeitenden Werkstücke nicht in einer einzigen Werkstückaufnahme verbleiben, sondern vielmehr sukzessive eine Vielzahl von verschiedenen Werkstückaufnahmen durchlaufen. Dies bedeutet, daß in nachteiliger Art und Weise die Werkstücke in den einzelnen Werkstückaufnahmen immer wieder aufs neue positioniert werden müssen. Diese Vorgehensweise bringt nicht nur in nachteiliger Art und Weise mit sich, daß hierfür ein komplexer Positioniermechanismus für jede Werkstückaufnahme vorgesehen werden muß. Vielmehr wird hierdurch auch die Taktzeit verlangsamt, da der immer wieder durchzuführende Positioniervorgang zeitaufwendig ist. Dies ist insbesondere von Nachteil, da bei den Durchlaufanlagen bereits der Werkstücktransport und das hierzu erforderliche Greifen des Werkstücks eine nicht unbeträchtliche Zeit in Anspruch nimmt.

Ein weiterer Nachteil der bekannten Durchlaufanlage besteht darin, daß diese Anlagen aufgrund der hierbei vorzusehenden Linienbearbeitung sehr lang bauen.

Desweiteren ist bei den bekannten Durchlaufanlagen von Nachteil, daß die Werkstückaufnahmen nach oben offen sind, so daß sich in nachteiliger Art und Weise Schmutz oder andere Verunreinigungen in den Werkstückaufnahmen ansammeln können.

Außerdem ist noch nachteilig, daß beim Entladen der Werkstücke aus der Entladestation das zu bearbeitende Werkstück um 180° gedreht werden muß, damit beim Abtransport die Sichtseite des Werkstücks nach oben liegt.

Aus der DE 41 25 961 ist eine als Durchlaufanlage konzipierte Bearbeitungsmaschine bekannt, die ein Transfersystem aufweist, bei der mehrere Bearbeitungsstationen entlang des linearen Transfersystems angeordnet sind. Das Transfersystem weist ein durch zwei parallel im Abstand zueinander angeordnete Auflageleisten ausgebildetes Bett auf, auf dem eine Werkstückpalette dadurch verschiebbar ist, indem diese durch eine Taktstange angetrieben wird, die eine Vorschubbewegung in der Taktrichtung der linear aufgebauten Bearbeitungsmaschine ausführt. Die Werkstückpalette besitzt einen polygonalen Querschnitt. Auf jeder der Seitenflächen der Werkstückpalette sind Auflageplätze für Werkstücke vorgesehen.

Zur Bearbeitung der Werkstücke durch die Bearbeitungsstationen der Bearbeitungsmaschine ist vorgesehen, daß Werkstücke in der nach oben weisenden Seitenfläche der Werkstückpalette eingesetzt werden und vom Transfersystem, in der Werkstückpalette aufgenommen, zu den einzelnen Bearbeitungsstationen der Bearbeitungsmaschine bewegt werden, ohne daß die Werkstückpalette mit polygonalem Querschnitt um ihre Achse bewegt wird. Zwar bleiben bei der aus der o.g. Druckschrift bekannten Bearbeitungsmaschine die Werkstücke während des Bearbeitungsprozesses in ihren Werkstückaufnahmen, jedoch besitzt die bekannte Bearbeitungsmaschine immer noch den Nachteil, daß sich in nachteiliger Art und Weise in den Werkstückaufnahmen Schmutz oder andere Verunreinigungen ansammeln können, da die Werkstückpalette mit polygonalem Querschnitt während eines Bearbeitungsvorgangs nicht gedreht wird, so daß immer die gleichen Werkstückaufnahmen nach oben zeigen.

Sollen nun andere Werkstücke bearbeitet werden, so wird die Werkstückpalette mit polygonalem Querschnitt so lange gedreht, bis die entsprechenden Werkstückaufnahmen nach oben zeigen. In dieser Position wird nun die Werkstückpalette auf das Bett aufgesetzt und die entsprechenden Werkstücke werden in die Werkstückaufnahmen der nach oben zeigenden Seitenfläche eingesetzt. Danach wird die Werkstückpalette mit den aufzunehmenden Werkstücken wie oben beschrieben in linearer Weise durch die von der Taktstange ausgeübten linearen Vorschubbewegungen zu den einzelnen Bearbeitungsstationen der bekannten Bearbeitungsmaschine bewegt.

Die andere der beiden o.g. Gruppen von Bearbeitungsmaschinen, die sogenannten Rundschalttischanlagen, sind dadurch charakterisiert, daß der Werkstücktransport von der Beladestation zu der ersten Bearbeitungsstation, zwischen den einzelnen Bearbeitungsstationen und von der letzten Bearbeitungsstation zu der EntladestatiDie andere der beiden o.g. Gruppen von Bearbeitungsmaschinen, die sogenannten Rundschalttischanlagen, sind dadurch charakterisiert, daß der Werkstücktransport von der Beladestation zu der ersten Bearbeitungsstation, zwischen den einzelnen Bearbeitungsstationen und von der letzten Bearbeitungsstation zu der Entladestation mittels eines Drehtellers erfolgt, auf dem die Werkstückaufnahmen angeordnet sind. Die Bearbeitungsstationen sind hierbei über dem Drehteller angeordnet, was in nachteiliger Art und Weise mit sich bringt, daß mit der Anzahl der Beladestationen der Bearbeitungsmaschine der Durchmesser des Drehtellers rasch zunimmt. Dieses Ansteigen des Durchmessers des Drehtellers bewirkt, daß das Trägheitsmoment der Anordnung quadratisch ansteigt, so daß die Drehgeschwindigkeit, mit der die Werkstücke zwischen den einzelnen Stationen der Rundschalttischanlage transportiert werden können, reduziert werden muß, um die mechanischen Belastungen in akzeptablen Grenzen zu halten, woraus eine langsame Taktgeschwindigkeit resultiert.

Desweiteren besitzen auch die Rundschalttischanlagen den Nachteil, daß ihre Werkstückaufnahmen nach oben offen sind, so daß das bereits angesprochene Verunreinigungsproblem auch bei diesen unvermindert auftritt. Desweiteren muß auch bei den Rundschalttischanlagen das Werkstück um 180° gedreht werden, damit dessen Sichtseite beim Abtransport nach oben liegt.

Es ist daher Aufgabe der Erfindung, eine Bearbeitungsmaschine, insbesondere eine Schweißmaschine, der eingangs genannten Art derart weiterzubilden, daß in besonders einfacher Art und Weise erreicht wird, daß die erfindungsgemäße Bearbeitungsmaschine kompakt baut und ein Werkstück während des gesamten Bearbeitungszyklus in einer einzigen Werkstückaufnahme verbleiben kann.

Diese Aufgabe wird erfindungsgemäß dadurch gelöst, daß die die Werkstücke zwischen den Stationen der Bearbeitungsmaschine transportierende Werkstück-Transporteinrichtung als eine um eine Drehachse drehbare Walze mit polygonalem Querschnitt ausgebildet ist, daß mindestens eine Mantelfläche des Körpers als eine Befestigungsfläche für eine Werkstückaufnahme ausgebildet ist, und daß die mindestens eine Beladestation, die mindestens eine Bearbeitungsstation und die mindestens eine Entladestation im wesentlichen entlang des Umfangs der Walze mit polygonalem Querschnitt angeordnet sind.

Durch die erfindungsgemäßen Maßnahmen wird in vorteilhafter Art und Weise eine insbesondere für einen Einsatz als Schweißmaschine geeignete Bearbeitungsmaschine ausgebildet, die sich durch ihren kompakten Aufbau und ihre hohe Taktrate auszeichnet. Da die Werkstücke während des gesamten Bearbeitungszyklus in einer einzigen Werkstückaufnahme verbleiben, ist in vorteilhafter Art und Weise kein Positioniervorgang für die einzelnen Werkstücke an den einzelnen Stationen der Bearbeitungsmaschine erforderlich, wodurch eine hohe Taktzeit erreicht werden kann. Durch die zu der Drehachse des Befestigungsflächen für die Werkstückaufnahmen ausbildenden Körpers mit polygonalem Querschnitt und zentrisch angeordneten Bearbeitungsstationen wird ein besonders kompakter Aufbau erreicht, wobei das Trägheitsmoment der erfindungsgemäßen Walze mit polygonalem Querschnitt der erfindungsgemäßen Bearbeitungsmaschine deutlich geringer ist als dasjenige der bekannten Rundschalttischanlagen. Hieraus resultiert, daß in vorteilhafter Art und Weise eine hohe Oralgeschwindigkeit möglich ist.

Eine vorteilhafte Weiterbildung der Erfindung sieht vor, daß die Achse der Walze mit polygonalem Querschnitt im wesentlichen horizontal angeordnet ist. Eine derartige Maßnahme besitzt den Vorteil, daß sich die Werkstückaufnahmen selbsttätig von losem Schmutz und Partikeln befreien.

Eine weitere vorteilhafte Weiterbildung der Erfindung sieht vor, daß die Entladestation als unterste Station der Bearbeitungsmaschine angeordnet ist. Eine derartige Anordnung besitzt den Vorteil, daß die Werkstücke mit der Sichtseite nach oben auf ein geeignetes Fördermittel abgelegt werden können, ohne daß hierzu ein zeitraubender und kompliziert durchzuführender Wendevorgang um 180° erforderlich ist.

Eine weitere vorteilhafte Weiterbildung der Erfindung sieht vor, daß die Beladestation von den Bearbeitungsstationen über Abschottungen getrennt ist. Eine derartige Konstruktionsweise besitzt den Vorteil, daß ein Bestücken der erfindungsgemäßen Bearbeitungsmaschine während des Bearbeitungsvorgangs der bereits in der Maschine befindlichen Werkstücke möglich ist, so daß in vorteilhafter Art und Weise eine Durchlaufproduktion, bei der in jedem Takt ein Fertigteil entsteht, gewährleistet ist.

Eine weitere vorteilhafte Weiterbildung der Erfindung sieht vor, daß die Bewegungen der erfindungsgemäßen Werkstück-Transporteinrichtung der erfindungsgemäßen Bearbeitungsmaschine einen sinoiden Bewegungsablauf aufweisen, so daß diese in vorteilhafter Weise harmonisch und ruck- und stoßfrei verlaufen.

Eine weitere vorteilhafte Weiterbildung der Erfindung sieht vor, daß die Walze mit polygonalem Querschnitt der erfindungsgemäßen Bearbeitungsmaschine über einen Sicherheitslichtvorhang abgesichert ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1: ein erstes Ausführungsbeispiel einer Bearbeitungsmaschine,
und
- Figur 2: eine Ansicht des Ausführungsbeispiels aus der Richtung II der Figur 1

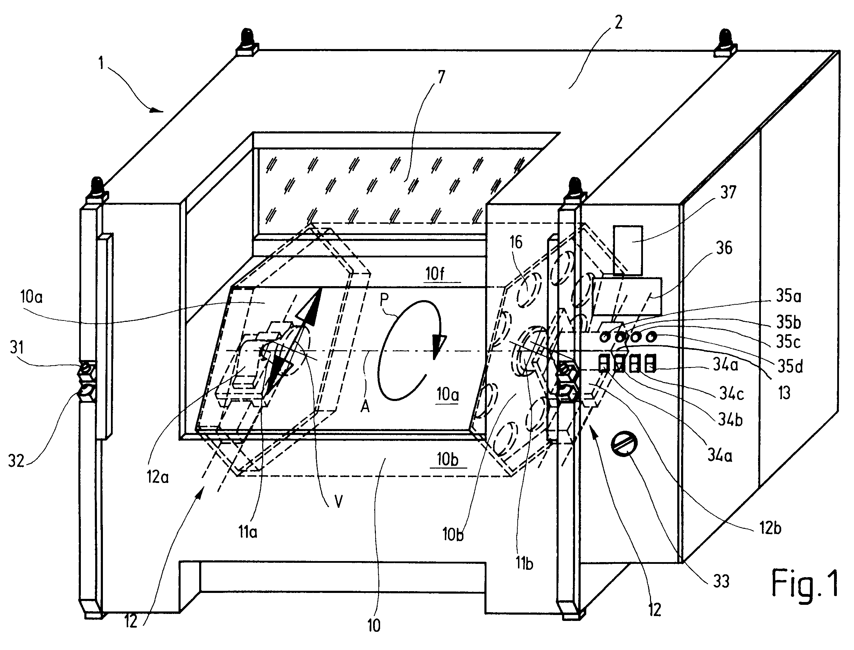

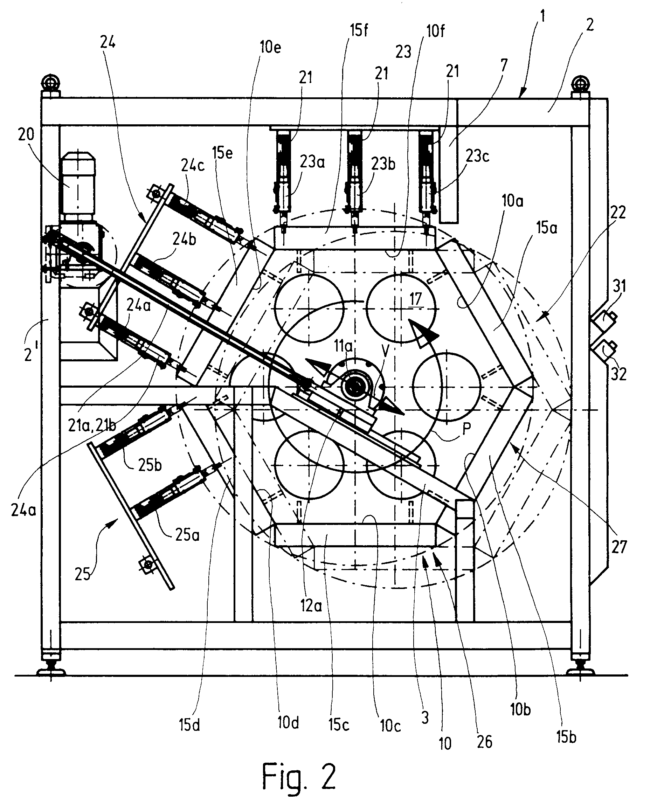

Die in den Figuren 1 und 2 dargestellte und allgemein mit 1 bezeichnete Bearbeitungsmaschine weist ein Gehäuse 2 auf, in dem um eine vorzugsweise im wesentlichen horizontal angeordnete Achse A drehbar eine Walze 10 angeordnet ist, die einen polygonalen Querschnitt, in dem hier gezeigten Fall einen sechseckigen Querschnitt, aufweist. Die vorzugsweise als Hohlkörper ausgebildete Walze 10, ("Revolver"), ist über Lagerelemente 11a, 11b in Führungselementen 12a, 12b einer Linearführung 12 gelagert, welche auf einer mit dem Gehäuse 2 verbundenen Rampe 3 verschiebbar sind. Die Walze 10 ist durch einen Drehantrieb 13 in Richtung des Pfeiles P um die Achse A drehbar und durch die Linearführung 12 zum Freifahren der in Fig. 2 näher dargestellten Bearbeitungswerkzeuge in Richtung des Doppelpfeils V verschiebbar. Die durch Stirnflächen 10a, 10b mit Erleichterungsbohrungen 16 und 17 begrenzten Mantelflächen 10a-10f der Walze 10 sind als Befestigungsflächen für in Figur 1 nicht dargestellte Werkstückaufnahmen 15a-15f (s. Fig.2) ausgebildet.

Wie desweiteren noch aus Figur 1 ersichtlich ist, weist die Bearbeitungsmaschine 1 einen Schalter 31 für einen Einhandstart sowie einen Schalter 32 für eine Notausschaltung der Bearbeitungsmaschine 1 auf. Desweiteren sind ein Hauptschalter 33 und Bedienschalter 34a-34d sowie Bedienknöpfe 35a-35d sowie zwei Leuchtanzeigen 36 und 37 vorhanden.

Die Funktionsweise der Bearbeitungsmaschine 1 wird nun anhand der in Figur 2 enthaltenen Seitenansicht der Maschine erläutert, aus der auch die in Figur 1 nicht gezeigten Erleichterungsbohrungen 17 an der linken Stirnfläche 10a der Walze 10 dargestellt sind.

Nachdem die Walze 10 durch eine entsprechende Verschiebebewegung der Führungselemente 12a, 12b der Linearführung 12, welche durch einen an der Rückwand 2' des Gehäuses 2 angebrachten Getriebebremsmotor 20, welcher über Pleuelstangen 21a, 21b die Führungselemente 12a, 12b der Linearführung 12 antreibt, aus ihrer in Figur 2 strichliert dargestellten Stellung - der Freifahrstellung für die Bearbeitungswerkzeuge der nachstehend näher beschriebenen Stationen - in die in Figur 2 durchgezogen gezeigte Arbeitsstellung bewegt wurde, wird ein erstes Werkstück (nicht gezeigt) in einer Beladestation 22 in die auf der Mantelfläche 10a der Walze 10 befestigte Werkstückaufnahme 15a eingelegt. Durch eine entsprechende Antriebsbewegung des Drehantriebs 13 wird die Walze 10 derart weitergedreht, bis die Werkstückaufnahme 15a und somit das in ihr aufgenommene Werkstück unter den Bearbeitungswerkzeugen 23a-23c einer ersten Bearbeitungsstation 23, z. B. unter den Schweißelementen einer ersten Schweißstation, zu liegen kommt. Während die vorzugsweise über Vorschubeinheiten 21 zustellbaren Bearbeitungswerkzeuge 23a-23c der ersten Bearbeitungsstation 23 das in der Werkstückaufnahme 15a abgelegte erste Werkstück entsprechend bearbeiten, insbesondere schweißen, wird in die auf der zweiten Mantelfläche 10b befestigte zweite Werkstückaufnahme 15b ein weiteres Werkstück einlegt. Hierbei ist von Vorteil, daß die Bearbeitungsstation 23 und die Beladestation 22 durch eine insbesonders aus Fig. 1 ersichtliche Abschottung 7 - vorzugsweise aus Plexiglas - getrennt sind.

Nachdem der Bearbeitungsvorgang des in der ersten Werkstückaufnahme 15a aufgenommenen ersten Werkstücks beendet wurde, wird durch eine entsprechende Drehung der Walze 10 diese weiterbewegt, bis die erste Werkstückaufnahme 15a sich unter den Bearbeitungswerkzeugen 24a-24c einer zweiten Bearbeitungsstation 24 befinden. Nun werden das in der ersten Werkstückaufnahme 15a aufgenommene Werkstück durch die Bearbeitungswerkzeuge 24a-24c der zweiten Bearbeitungsstation 24 und das in der zweiten Werkstückaufnahme 15b befindliche zweite Werkstück von den Bearbeitungswerkzeugen 23a-23c der ersten Bearbeitungsstation 23 bearbeitet.

Zu diesem Zeitpunkt befindet sich die auf der dritten Mantelfläche 10c der Walze 10 befestigte dritte Werkstückaufnahme 10c in der Beladestation 22 in ihrer von außen zugänglichen Beladestellung, so daß in die dritte Werkstückaufnahme15c ein drittes Werkstück eingelegt werden kann, während die ersten beiden Werkstücke von den Bearbeitungswerkzeugen 24a-24c bzw. 23a-23c der zweiten bzw. der ersten Bearbeitungsstation 23 bzw. 24 bearbeitet werden.

In entsprechender Art und Weise werden im nächsten Takt des Bearbeitungszyklus das in der ersten Werkstückaufnahme 15a aufgenommene erste Werkstück unter zwei Bearbeitungswerkzeuge 25a, 25b einer dritten Bearbeitungsstation 25, das in der zweiten Werkstückaufnahme 15b aufgenommene zweite Werkstück unter die Bearbeitungswerkzeuge 24a-24c der zweiten Bearbeitungsstation 24, das in der dritten Werkstückaufnahme 15c aufgenommene dritte Werkstück unter die Bearbeitungswerkzeuge 23a-23c der ersten Bearbeitungsstation 23 und die vierte Werkstückaufnahme 15d in ihre Beladestellung in die Beladestation 22 bewegt.

Nachdem der Bearbeitungsvorgang des ersten Werkstücks durch die beiden Bearbeitungswerkzeuge 25a, 25b der dritten Bearbeitungsstation 25 beendet wurde, ist der von der Bearbeitungsmaschine 1 am ersten Werkstück vorzunehmende Bearbeitungsprozeß beendet.

Im darauffolgenden fünften Takt wird durch eine entsprechende Drehung der Walze 10 das in der ersten Werkstückaufnahme 15a aufgenommene erste Werkstück um eine Teilung der Walze 10 weiterbewegt und wird derart in einer Entladestation 26 positioniert, welche - wie aus Figur 2 ersichtlich ist - vorzugweise derart angeordnet, daß sie die unterste Station der Stationen 22-26 der Bearbeitungsmaschine 1 ausbildet. Wird nun die Halterung des ersten Werkstücks in der ersten Werkstückaufnahme 15a auf bekannte Art und Weise gelöst, so fällt das erste Werkstück mit der Sichtseite nach oben auf eine in den Figuren nicht dargestellte Fördereinrichtung und kann derart leicht aus der Bearbeitungsmaschine 1 abtransportiert werden.

Hierbei ist von Vorteil, daß die Werkstückaufnahmen 15a-15f in dieser Position nach unten offen sind, so daß in vorteilhafter Art und Weise Schmutz oder andere Verunreinigungen von selbst aus der entsprechenden Werkstückaufnahme herausfallen.

Im darauffolgenden sechsten Takt des Bearbeitungszyklus wird das in der zweiten Werkstückaufnahme 15b aufgenommene zweite Werkstück, welches zuvor durch die Bearbeitungswerkzeuge 25a, 25b der dritten Bearbeitungsstation 25 bearbeitet wurde, in die Entnahmestation 26 bewegt und wie oben beschrieben aus dieser gelöst und abtransportiert. Die erste Werkstückaufnahme 15a befindet sich in diesem Takt in einer Leerstation 27 und wird im darauffolgenden Takt wieder zur Beladestation 22 transportiert, um erneut ein erstes Werkstück aufzunehmen.

Abschließend ist festzustellen, daß die beschriebene Ausgestaltung der Bearbeitungsmaschine 1 mit einer Beladestation 22, drei Bearbeitungsstationen 23-25, einer Entladestation 26 und einer Leerstation 27 nur beispielhaften Charakter besitzt. Es ist dem Fachmann aus obiger Beschreibung klar ersichtlich, daß - eine entsprechende Teilung der Walze 10 vorausgesetzt - auch mehr oder weniger als sechs Stationen 22-27 vorgesehen werden können, wobei die Aufteilung der Stationen 22-27 der Bearbeitungsmaschine 1 in weiten Grenzen frei gewählt werden kann.

Es bedarf auch keiner weiteren Erläuterung, daß die durch den Drehantrieb 13 bewirkte Drehung der Walze 10 im wesentlichen frei programmierbar ist und auch ungerade Teilschritte beinhalten kann. Hierbei ist es von Vorteil vorzusehen, daß sämtliche Bewegungen der Walze 10 einen sinoiden Drehungsablauf aufweisen, wodurch in vorteilhafter Art und Weise bewirkt wird, daß die Bewegungen der Walze 10 harmonisch und ruck- und stoßfrei verlaufen.

## Patentansprüche

**1.** Bearbeitungsmaschine, insbesondere Schweißmaschine, die mindestens eine Beladestation (22), mindestens eine Bearbeitungsstation (23-25) und mindestens eine Entladestation (26) für von der Bearbeitungsmaschine (1) zu bearbeitende Werkstücke besitzt, wobei die Werkstücke von der mindestens einen Beladestation (22) über die mindestens eine Bearbeitungsstation (23-25) zu der mindestens einen Entladestation (26) von einer Werkstück-Transporteinrichtung transportierbar sind, dadurch gekennzeichnet, daß die die Werkstücke zwischen den Stationen (22-26) der Bearbeitungsmaschine (1) transportierende Werkstück-Transporteinrichtung als eine um eine Drehachse (A) drehbare Walze (10) ausgebildet ist, daß mindestens eine der Mantelflächen (10a-10e) der Walze (10) als eine Befestigungsfläche für eine Werkstückaufnahme (15a-15e) ausgebildet ist, und daß die mindestens eine Beladestation (22), die mindestens eine Bearbeitungsstation (23-25) und die mindestens eine Entladestation (26) im wesentlichen entlang des Umfangs der Walze (10) mit polygonalem Querschnitt in oder entgegengesetzt zu deren Drehrichtung (P) angeordnet sind.

**2.** Bearbeitungsmaschine nach Anspruch 1, dadurch gekennzeichnet, daß die die Walze (10) mit polygonalem Querschnitt tragende Drehachse (A) im wesentlichen horizontal angeordnet ist.

**3.** Bearbeitungsmaschine nach einem der Ansprüche 1 oder 2, dadurch gekennzeichnet, daß mindestens eine der Entladestationen (26) als unterste Station der Stationen (22-26) der Bearbeitungsmaschine (1) angeordnet ist.

**4.** Bearbeitungsmaschine nach einem derj vorangehenden Ansprüche, dadurch gekennzeichnet, daß die Werkstücke in der Entladestation (26) aus den Werkstückaufnahmen (15a-15e) der Walze (10) mit polygonalem Querschnitt entnehmbar sind.

**5.** Bearbeitungsmaschine nach einem der vorangehenden Ansprüche, dadurch gekennzeichnet, daß die Bearbeitungsmaschine (1) eine Fördereinrichtung zum Abtransport der Werkstücke aufweist.

**6.** Bearbeitunsmaschine nach Anspruch 5, dadurch gekennzeichnet, daß die Fördereinrichtung unter der Entladestation (26) angeordnet ist.

**7.** Bearbeitungsmaschine nach einem der vorangehenden Ansprüche, dadurch gekennzeichnet, daß die Bearbeitungsmaschine (1) eine die mindestens eine Beladestation (22) von der mindestens einen Bearbeitungsstation (23-25) separierende Abschottung (7) aufweist.

**8.** Bearbeitungsmaschine nach einem der vorangehenden Ansprüche, dadurch gekennzeichnet, daß ein Werkstück während des gesamten von der Bearbeitungsmaschine (1) durchzuführenden Bearbeitungsprozesses in einer einzigen Werkstückaufnahme (15a-15e) aufgenommen ist.

**9.** Bearbeitungsmaschine nach einem der vorangehenden Ansprüche, dadurch gekennzeichnet, daß die Walze (10) mit polygonalem Querschnitt im Gehäuse (2) der Bearbeitungsmaschine (1) durch eine Linearführung (12) verschiebbar ist.

**10.** Bearbeitungsmaschine nach Anspruch 9, dadurch gekennzeichnet, daß die Linearführung (12) zwei an gegenüberliegenden Seiten (10a, 10b) der Walze (10) mit polygonalem Querschnitt angeordnete Führungselemente (12a, 12b) aufweist, in der die Drehachse (A) ausbildende Lagerelemente (11a, 11b) der Walze (10) aufnehmbar sind.

**11.** Bearbeitungsmaschine nach Anspruch 10, dadurch gekennzeichnet, daß die Verschiebebewegung der Führungselemente (12a, 12b) der Linearführung (12) über Pleuelstangen (20a, 20b) eines Getriebes (20) antreibbar ist.

**13.** Bearbeitungsmaschine nach einem der vorangehenden Ansprüche, dadurch gekennzeichnet, daß die Walze (10) mit polygonalem Querschnitt von einem Drehantrieb (13) antreibbar ist.

**14.** Bearbeitungsmaschine nach Anspruch 13, dadurch gekennzeichnet, daß die Walze (10) mit polygonalem Querschnitt servomotorisch über eine Untersetzungsgetriebe und eine Federdruckbremse antreibbar ist.

**15.** Bearbeitungsmaschine nach Anspruch 1, dadurch gekennzeichnet, daß mindestens eine Bearbeitungsstation (23-25) der Bearbeitungsmaschine (1) mindestens ein Bearbeitungswerkzeug (23a-23c; 24a-24c; 25a, 25b ) aufweist.

**16.** Bearbeitungsmaschine nach Anspruch 15, dadurch gekennzeichnet, daß mindestens ein Bearbeitungswerkzeug (23a-23c; 24a-24c; 25a, 25b) über eine Vorschubeinheit (21) zustellbar ist.

**17.** Bearbeitungsmaschine nach Anspruch 16, dadurch gekennzeichnet, daß mindestens ein Bearbeitungswerkzeug (23a-23c; 24a-24c; 25a, 25b) als Schweißwerkzeug ausgebildet ist.

**18.** Bearbeitungsmaschine nach einem der vorangehenden Ansprüche, dadurch gekennzeichnet, daß die Bearbeitungsmaschine (1) eine Sicherheitsabschaltung der Walze (10) mit polygonalem Querschnitt aufweist.

**19.** Bearbeitungsmaschine nach Anspruch 18, dadurch gekennzeichnet, daß die Sicherheitsabschaltung als Sicherheitslichtvorhang ausgebildet ist.

**20.** Bearbeitungsmaschine nach einem der vorangehenden Ansprüche, dadurch gekennzeichnet, daß die vom Drehantrieb (13) bewirkte Bewegung der Walze (10) mit polygonalem Querschnitt einen sinoidalen Bewegungsablauf aufweist.
